# EUROPÄISCHE PATENTSCHRIFT

(11) **EP 2 905 524 B1**
(45) Veröffentlichungstag und Bekanntmachung des Hinweises auf die Patenterteilung: **04.04.2018**
(21) Anmeldenummer: 15151929.5
(22) Anmeldetag: 21.01.2015
(51) Int. Cl.: F16M 13/02

(54) **Haltevorrichtung zum Halten eines elektronischen Gerätes an einer Wand**
Holding device for holding an electronic device to a wall
Dispositif de maintien pour le maintien d'un appareil électronique sur un mur

(30) Priorität: 22.01.2014 DE 102014201094
(43) Veröffentlichungstag der Anmeldung: 12.08.2015
(73) Patentinhaber: Alfred Schellenberg GmbH, 57078 Siegen (DE)
(72) Erfinder: Schellenberg, Sascha, 57074 Siegen (DE); Gross, Christian, 57250 Netphen (DE); Müller, Stefan, 57072 Siegen (DE)
(74) Vertreter: Grabovac, Dalibor

(56) Entgegenhaltungen:
- CH-B1- 702 130
- DE-A1-102009 024 990
- JP-A- H06 292 283
- JP-U- S5 917 675
- US-A1- 2009 009 940

## Beschreibung

Die Erfindung betrifft ein System beinhaltend eine Haltevorrichtung zum Halten eines elektronischen Gerätes an einer Wand mit einem Befestigungselement zum Montieren der Haltevorrichtung in einer Montagestellung an einer Wand und mit einer Rückseite, die dazu ausgebildet und bestimmt ist, in der Montagestellung der Wand zugewandt zu sein, und mit einem viereckigen Rahmen, der einen zu einer Vorderseite hin offenen Aufnahmeraum für das elektronische Gerät umgibt, und mit wenigstens einem Fixiermittel, mit dem ein elektronisches Gerät in dem Aufnahmeraum werkzeugfrei in einer Fixierstellung fixierbar und werkzeugfrei wieder aus der Fixierstellung lösbar ist und beinhaltend ein elektronisches Gerät, das bezogen auf den viereckigen Rahmen formschlüssig in dem Aufnahmeraum in einer Fixierstellung fixierbar ist oder fixiert ist.

Elektronische Geräte, wie beispielsweise Funkfernbedienungen, sind zumeist als Handgeräte mit einem Gehäuse ausgebildet, die in einer Hand gehalten und mit der anderen Hand bedient werden. Zumeist liegen diese Geräte lose in Regalen, auf Tischen oder in Schubladen herum, wenn sie gerade nicht benutzt werden. Oft werden die herumliegenden Geräte optisch als störend empfunden. Darüber hinaus besteht die Gefahr, dass die Geräte manchmal auch nicht sofort aufgefunden werden können, insbesondere wenn sie seit längerem nicht benutzt wurden.

Aus DE 298 18 567 U1 ist eine Bedienungseinrichtung für motorisch verstellbare Möbel bekannt. Diese Einrichtung weist ein Bedienteil auf, das lösbar mit einem fest am Möbel (nicht an einer Wand) montierten Halteteil verbunden ist, wobei das Bedienteil mit Bedienelementen zur Benutzung der Einstellfunktionen des Möbels ausgerüstet ist. Das Halteteil ist im Wesentlichen C-förmig ausgebildet, so dass das Bedienteil zwischen einem oberen Vorsprung und einem unteren Vorsprung mittels Rasterelementen eingespannt werden kann. Die Bedienungseinrichtung hat den Nachteil, dass ein an dem Halteteil befestigtes Bedienteil leicht versehentlich gelöst werden kann und dann zwangsläufig herunterfällt. Außerdem trägt die Bedienungseinrichtung in der Tiefe sehr stark auf, so dass sie weit von dem Möbel hervorsteht, was die Gefahr eines versehentlichen Herauslösens des Bedienteils aus dem Halteteil verstärkt und darüber hinaus als optisch störend empfunden wird.

CH 702 130 B1 offenbart ein Fernbedienungsmodul mit Bedienungstasten für die Steuerung von Hausinstallationen wie Sonnenstoren, Beleuchtungen, Klimaanlagen und dergleichen. Außerdem offenbart CH 702 130 B1 eine Halterung für ein solches Fernbedienungsmodul, wobei die Innenkonturen der Halterung den Außenkonturen des Fernbedienungsmoduls entsprechen, so dass die Halterung das Fernbedienungsmodul im Wesentlichen vollständig umfasst. Allerdings trägt das Fernbedienungsmodul in der Tiefe sehr stark auf und steht räumlich weit über die Halterung hervor.

Es ist daher die Aufgabe der vorliegenden Erfindung, ein System mit einer Haltevorrichtung und einem elektronischen Gerät anzugeben, wobei die Haltevorrichtung zum zuverlässigen und sicheren Halten des elektronischen Gerätes an einer Wand ausgebildet ist und die darüber hinaus die Möglichkeit bietet so ausgebildet zu werden, dass sie optisch nicht als störend empfunden wird.

Die Aufgabe wird durch ein System gelöst, dass dadurch gekennzeichnet ist, dass der Rahmen Form und die Abmessungen eines Norm-Steckdosenblendrahmens oder eines Norm-Wippschalterblendrahmens aufweist und dass das in der Fixierstellung fixierte elektronische Gerät rückseitig an einem Vorsprung anliegt und dass das elektronische Gerät durch Ausüben einer Kraft auf dessen Vorderseite zum Lösen aus der Fixierstellung um den Vorsprung verschwenkbar ist oder nach hinten eine Mulde an den Aufnahmeraum angrenzt, in die eine Kante oder eine Ecke des elektronischen Gerätes zum Lösen aus der Fixierstellung hinein verschwenkbar ist derart, dass eine gegenüberliegende Kante oder Ecke des elektronischen Gerätes sich nach vorne aus dem Aufnahmeraum bewegt.

Durch die Verwendung eines geschlossenen viereckigen Rahmens für die Haltevorrichtung ist gewährleistet, dass ein in den Aufnahmeraum eingebrachtes elektronisches Gerät, von einer an der Vorderseite liegenden Zugangsöffnung für den Aufnahmeraum abgesehen, allseitig geschützt gehalten ist. Auf diese Weise ist ein versehentliches Lösen des elektronischen Geräts aus der Haltevorrichtung, beispielsweise durch versehentliches Anstoßen im Vorübergehen, weitestgehend ausgeschlossen.

Insbesondere kann die Haltevorrichtung eine den Aufnahmeraum zur Rückseite hin ganz oder teilweise begrenzende Rückwand aufweisen. Die Rückwand kann beispielsweise Bohrungen aufweisen, um die Haltevorrichtung an einer Wand anschrauben zu können. Die Rückwand kann rückseitig auf den Rahmen aufgesetzt sein. Es ist alternativ auch möglich, dass der Rahmen die Rückwand umgibt. Insbesondere kann auch vorgesehen sein, dass der Rahmen und die Rückwand gemeinsam einstückig (gegebenenfalls zusammen mit weiteren Bauteilen, wie beispielsweise dem Fixiermittel), beispielsweise als Spritzgußteil, hergestellt sind. An der Rückwand können, was weiter unten noch im Detail erläutert ist, Elemente angeordnet sein, die ein einfaches Lösen eines an dem Halteteil befestigten elektronischen Gerätes ermöglichen und/oder erleichtern. Darüber hinaus bietet eine Rückwand den Vorteil, dass ein an dem Halteteil befestigtes elektronisches Gerät auch rückseitig zusätzlich geschützt ist.

Das erfindungsgemäße System kann vorteilhaft insbesondere an einer Gebäudewand, ganz insbesondere an einer Wand eines Wohn- oder Büroraumes optisch unauffällig angebracht werden.

Bei einer vorteilhaften Ausführung ist das Fixiermittel an dem Rahmen angeordnet. Alternativ ist es auch möglich, dass das Fixiermittel Teil des Rahmens ist. Insbesondere kann vorteilhaft vorgesehen sein, dass das Fixiermittel gemeinsam einstückig mit dem Rahmen hergestellt ist.

Das Fixiermittel kann insbesondere ein Rastelement und/oder einen Klemmbügel und/oder ein Klemmelement aufweisen.

Insbesondere kann vorteilhaft vorgesehen sein, dass die Haltevorrichtung frei von elektrischen Steckverbindungen ist. Vielmehr kann die Haltevorrichtung dazu ausgebildet sein, elektronische Geräte, die für sich gesehen autark betreibbar sind, lediglich mechanisch zu halten. Insoweit kann die erfindungsgemäße Haltevorrichtung vorteilhaft frei von elektrischen und elektronischen Bauteilen sein. Es ist allerdings alternativ auch möglich, dass die Haltevorrichtung eigene elektrische oder elektronische Bauteile beinhaltet, die mit einem gehaltenen elektronischen Gerät drahtlos oder per Steckverbindung verkoppelt werden können.

Bei einer ganz besonders vorteilhaften Ausführung kann vorgesehen sein, dass der Rahmen Form und/oder Aussehen und/oder die Abmessungen des äußeren Rahmens eines Norm-Blendrahmens für eine Mehrfachsteckdose oder eines Norm-Blendrahmens für einen Mehrfachschalter aufweist. Eine solche Ausführung hat den ganz besonderen Vorteil, dass sich die Haltevorrichtung samt des daran befestigten elektronischen Geräts optisch ganz besonders vorteilhaft und unauffällig an eine Wand anschmiegt, weil zumeist optisch weitgehend ähnlich ausgebildete Gegenstände, nämlich Lichtschalter und Steckdosen, an deren Erscheinungsform der Benutzer gewöhnt ist, ebenfalls an der Wand, insbesondere einer Wand eines Wohnraums oder eines Büroraums, vorhanden sind.

Insbesondere im Hinblick auf die üblichen Abmessungen für Steckdosen oder Schalter kann vorteilhaft vorgesehen sein, dass der Aufnahmeraum eine Breite im Bereich von 45 mm bis 60 mm, insbesondere im Bereich von 49 mm bis 56 mm, insbesondere von 50mm oder von 55 mm aufweist.

Analog kann vorteilhaft auch vorgesehen sein, dass der Aufnahmeraum eine Höhe im Bereich von 45 mm bis 60 mm, insbesondere im Bereich von 49 mm bis 56 mm, insbesondere von 50mm oder von 55 mm aufweist.

Hinsichtlich der Abmessungen des Aufnahmeraums bestehen keine grundsätzlichen Grenzen. Insbesondere kann der Aufnahmeraum auch eine Breite und oder eine Höhe aufweisen, die wesentlich größer ist als die oben genannte Breite.

Insbesondere kann vorteilhaft vorgesehen sein, dass die Breite und die Höhe des Aufnahmeraums gleich sind. Eine solche Ausführung bietet sich insbesondere für kleinere elektronische Geräte, wie beispielsweise für Zeitschaltuhren oder kleinere Funkfernbedienungen, insbesondere Funkfernbedienungen zum Bedienen eines Rollladens oder einer Jalousie, an.

Insbesondere für etwas größere elektronische Geräte kann vorteilhaft vorgesehen sein, dass der Aufnahmeraum eine Höhe aufweist, die dem doppelten seiner Breite plus der Breite des Rahmes entspricht. Eine solche Ausführung bietet vorteilhaft optisch im Wesentlichen das Erscheinungsbild eines Doppelschalters oder einer Doppelsteckdose. Insbesondere bei einer solchen Ausführung kann vorteilhaft vorgesehen sein, dass der Aufnahmeraum eine Höhe im Bereich von 110 mm bis 140 mm, insbesondere im Bereich von 122 mm bis 128 mm, insbesondere von 125 mm aufweist.

Insbesondere für ganz besonders große elektronische Geräte, wie beispielsweise ein Smartphone oder eine große Funkfernbedienung kann vorteilhaft vorgesehen sein, dass der Aufnahmeraum eine Höhe aufweist, die dem dreifachen seiner Breite plus dem doppelten der Breite des Rahmes entspricht. Eine solche Ausführung bietet vorteilhaft optisch im Wesentlichen das Erscheinungsbild eines Dreifachschalters oder einer Dreifachsteckdose insbesondere einer solchen Ausführung kann vorteilhaft vorgesehen sein, dass der Aufnahmeraum eine Höhe im Bereich von 180 mm bis 210 mm, insbesondere im Bereich von 192 mm bis 198 mm, insbesondere von 195 mm aufweist.

Bei einer besonderen Ausführungsform weist der Rahmen eine Breite im Bereich von 5 mm bis 25 mm, insbesondere im Bereich von 12 mm bis 17 mm, insbesondere von 15 mm auf. Eine solche Ausführung hat den ganz besonderen Vorteil, dass die Rahmenbreite im Wesentlichen der Rahmenbreite bei üblichen Steckdosenrahmen oder Schalterrahmen, insbesondere Norm-Steckdosenrahmen oder Norm-Schalterrahmen, entspricht, so dass insbesondere optisch eine gute Anpassung an für den Benutzer bekannte und zumeist ohnehin vorhandener Formen gegeben ist.

Bei einer vorteilhaften Ausführungsform sind das Befestigungselement und/oder das Fixiermittel relativ zu dem Aufnahmeraum derart angeordnet, dass sie von einem gehaltenen elektronischen Gerät verdeckt werden. Eine solche Ausführung hat den Vorteil, dass das Befestigungselement bei fixiertem elektronischem Gerät nicht sichtbar ist und dass darüber hinaus eine Demontage der Haltevorrichtung nur vorgenommen werden kann, wenn zuvor das fixierte elektronische Gerät abgenommen wurde und so vor versehentlichen Beschädigungen bei der Demontage geschützt ist. Beispielsweise ist es möglich, das Befestigungselement, wie bereits erwähnt, an einer Rückwand der Haltevorrichtung anzuordnen, die den Aufnahmeraum rückseitig begrenzt.

Bei einer ganz besonders vorteilhaften Ausführungsform ist der Aufnahmeraum nach hinten teilweise von einem Vorsprung begrenzt. Alternativ oder zusätzlich kann auch vorgesehen sein, dass von hinten ein Vorsprung in den Aufnahmeraum ragt. Diese Ausführungsformen haben den ganz besonderen Vorteil, dass das mit einer Rückseite an dem Vorsprung anliegende elektronische Gerät durch eine parallel zum Vorsprung versetzte, senkrecht auf die Frontfläche des elektronischen Geräts wirkende Krafteinwirkung innerhalb der Haltevorrichtung verschwenkt werden kann, so dass automatisch eine Kante oder eine Ecke des elektronischen Geräts aus dem Aufnahmeraum heraus verschwenkt wird, die dann zum Entnehmen des elektronischen Geräts leicht vom Benutzer gegriffen werden kann.

Alternativ oder zusätzlich kann auch vorgesehen sein, dass eine Mulde an den Aufnahmeraum angrenzt, in die eine Kante oder eine Ecke des elektronischen Gerätes, ausgelöst durch eine Krafteinwirkung auf die Frontseite des elektronischen Geräts, hinein verschwenkbar ist. Dies insbesondere der Art, dass automatisch eine gegenüberliegende Kante oder Ecke aus dem Aufnahmeraum heraus verschwenkt wird und gegriffen werden kann.

Für den Fall, dass die Abmessungen des Aufnahmeraums der Haltevorrichtung nicht mit den Abmessungen eines zu haltenden elektronischen Geräts korrespondieren, kann vorteilhaft eine Adapterhaltevorrichtung vorhanden sein. Die Adapterhaltevorrichtung kann insbesondere im Wesentlichen analog aufgebaut sein, wie die Haltevorrichtung.

Von ganz besonderem Vorteil ist eine Adapterhaltevorrichtung mit einem viereckigen Adapter-Rahmen, der einen zu einer Vorderseite hin offenen Adapter-Aufnahmeraum für ein elektronische Gerät umgibt, und mit wenigstens einem Fixiermittel, mit dem ein elektronisches Gerät in dem Adapter-Aufnahmeraum in einer Fixierstellung werkzeugfrei fixierbar und werkzeugfrei wieder aus der Fixierstellung lösbar ist, wobei die Adapterhaltevorrichtung, insbesondere formschlüssig, in den Aufnahmeraum einer erfindungsgemäßen Haltevorrichtung einfügbar und dort fixierbar ist.

Insbesondere kann vorteilhaft vorgesehen sein, dass die Größe des Aufnahmeraums und die äußeren Abmessungen des elektronischen Geräts derart aufeinander abgestimmt sind, dass ein sicheres, insbesondere wenigstens in Bezug auf den Rahmen formschlüssiges Fixieren des elektronischen Geräts in dem Aufnahmeraum ermöglicht ist.

Das elektronische Gerät kann beispielsweise als Funk-Fernbedienung oder als Funk-Fernbedienung für einen Gurtwickler oder als Funk-Fernbedienung für einen motorisch angetriebenen Rollladen oder als Funk-Zeitschaltuhr oder als Tablet-PC oder als Telefon ausgebildet sein.

Bei einer besonders vorteilhaften Ausführung ist das elektronische Gerät nach vorne hin bündig mit dem Rahmen abschließend in dem Aufnahmeraum fixierbar ist. Eine solche Ausführung hat den besonderen Vorteil, dass ein versehentliches Lösen des elektronischen Geräts aus der Fixierstellung weit gehend vermieden ist, weil das elektronische Gerät an 4 Seiten von dem Rahmen verdeckt und geschützt ist.

Es ist vorgesehen, dass das elektronische Gerät bezogen auf den viereckigen Rahmen formschlüssig in dem Aufnahmeraum in der Fixierstellung fixierbar ist oder fixiert ist. Dies ist im Hinblick auf ein sicheres Halten des elektronischen Geräts in der Fixierstellung vorteilhaft.

Das System kann vorteilhaft auch derart ausgebildet sein, dass das elektronische Gerät mittels einer Adapterhaltevorrichtung nach Anspruch 9 in dem Aufnahmeraum der Haltevorrichtung fixierbar ist oder fixiert ist.

In der Zeichnung ist der Erfindungsgegenstand schematisch dargestellt und wird anhand der Figuren nachfolgend beschrieben, wobei gleiche oder gleich wirkende Elemente zumeist mit denselben Bezugszeichen versehen sind. Dabei zeigen:
- Fig. 1: ein erstes Ausführungsbeispiel eines erfindungsgemäßen Systems mit einer Haltevorrichtung und mit einem elektronischen Gerät vor dem Einfügen in den Aufnahmeraum der Haltevorrichtung,
- Fig.2: das in Figur 1 dargestellte erste Ausführungsbeispiel, wobei das elektronische Gerät in den Aufnahmeraum eingefügt ist,
- Fig. 3: das Lösen eines elektronischen Geräts aus der Fixierstellung bei dem ersten Ausführungsbeispiel,

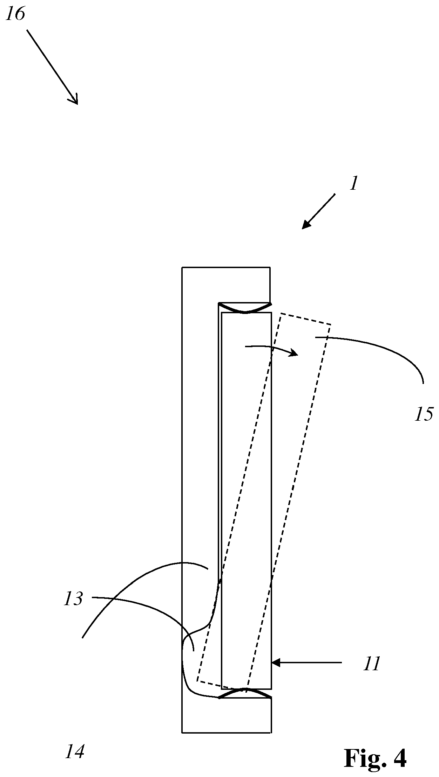

- Fig. 4: das Lösen eines elektronischen Geräts aus der Fixierstellung bei einem zweiten Ausführungsbeispiel,
- Fig. 5: ein drittes Ausführungsbeispiel eines erfindungsgemäßen Systems mit einer Haltevorrichtung und mit einem elektronischen Gerät, das in den Aufnahmeraum der Haltevorrichtung einfügbar ist,
- Fig. 6: ein viertes Ausführungsbeispiel eines erfindungsgemäßen Systems mit einer Haltevorrichtung und mit einem elektronischen Gerät, das in den Aufnahmeraum der Haltevorrichtung einfügbar ist.

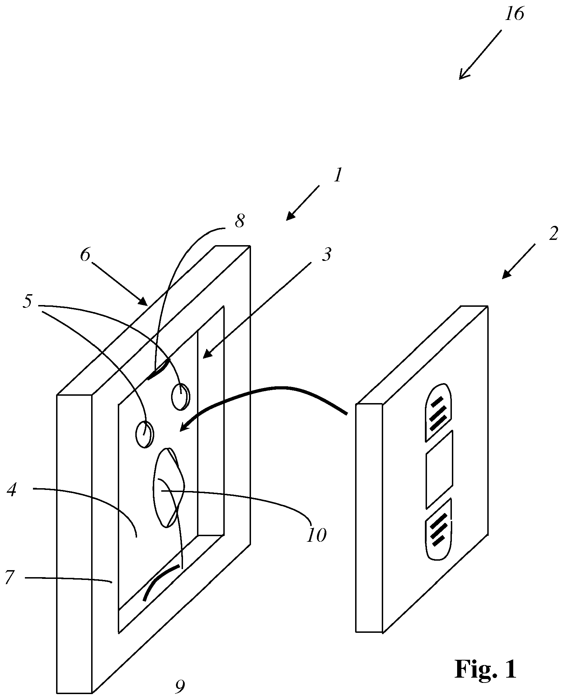

Fig. 1 zeigt ein Ausführungsbeispiel eines erfindungsgemäßen Systems 16 mit einer Haltevorrichtung 1 und einem elektronischen Gerät 2, dass in diesem Beispiel als Funkfernbedienung für einen Rollladen ausgebildet ist, vor dem Einfügen in den Aufnahmeraum 3 der Haltevorrichtung 1.

Die Haltevorrichtung 1 weist eine Rückwand 4 mit 2 Bohrungen 5 auf, die als Befestigungselement zum Montieren der Haltevorrichtung 1 in einer Montagestellung an einer (nicht dargestellten) Wand dienen. In der Montagestellung ist eine Rückseite 6 der Haltevorrichtung 1 der Wand zugewandt.

Die Haltevorrichtung weist einen viereckigen Rahmen 7 auf, der den zu einer Vorderseite hin offenen Aufnahmeraum 3 für das elektronische Gerät 2 umgibt.

Die Haltevorrichtung 1 weist außerdem ein erstes Fixiermittel 8 und ein zweites Fixiermittel 9 auf, die beide jeweils als Federbügel ausgebildet sind und dazu dienen, ein in den Aufnahmeraum eingebrachtes elektronisches Gerät 2 in einer Fixierstellung derart zu halten, dass es werkzeugfrei wieder aus der Fixierstellung entnommen werden kann.

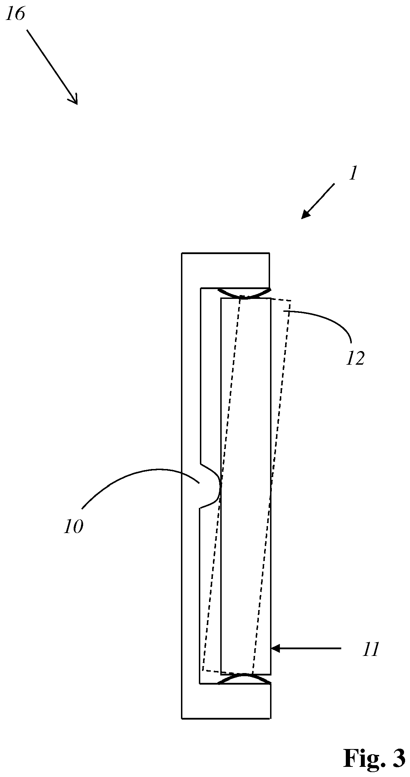

Die Haltevorrichtung 1 weist außerdem einen an der Rückwand 4 angeordneten zum Aufnahmeraum 3 gerichteten, zentral angeordneten Vorsprung 10 auf, an dem die Rückseite des in den Aufnahmeraum 3 eingebrachten elektronischen Geräts 2 zur Anlage kommt. Der Vorsprung 10 dient dazu, ein in der Fixierstellung fixiertes elektronisches Gerät 2 auf einfache Weise wieder lösen und aus dem Aufnahmeraum 3 entnehmen zu können, was im Detail in Figur 3 illustriert und weiter unten beschrieben ist.

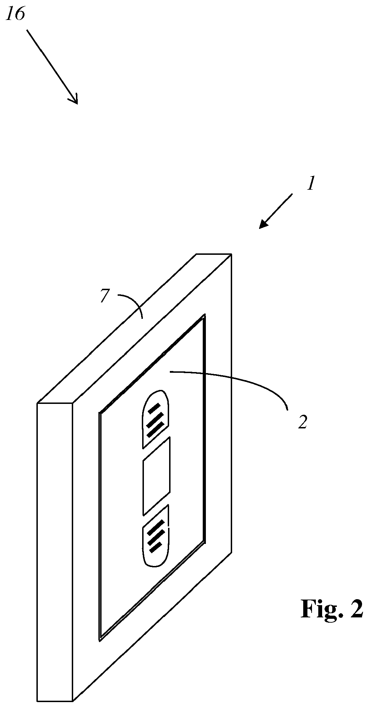

Figur 2 zeigt das in Figur 1 dargestellte Ausführungsbeispiel, wobei das elektronische Gerät 2 formschlüssig in den Aufnahmeraum 3 der Haltevorrichtung 1 eingefügt ist. Es ist zu erkennen, dass die Haltevorrichtung 1 zusammen mit dem elektronischen Gerät 2 in die Anmutung eines üblichen Lichtschalters aufweist.

Figur 3 zeigt das Lösen eines elektronischen Geräts 2 aus der Fixierstellung bei dem ersten Ausführungsbeispiel. Das mit seiner Rückseite an dem Vorsprung 10 anliegende elektronische Gerät 2 kann durch eine parallel zum Vorsprung versetzte, senkrecht auf die Frontfläche des elektronischen Geräts 2 wirkende Krafteinwirkung 11 innerhalb der Haltevorrichtung 1 verschwenkt werden kann, so dass automatisch eine Kante 12 oder eine Ecke des elektronischen Geräts 2 aus dem Aufnahmeraum 3 heraus verschwenkt wird, die dann zum Entnehmen des elektronischen Geräts 2 leicht vom Benutzer gegriffen werden kann.

Alternativ zu der in Figur 3 dargestellten Lösung zum leichten Entnehmen des elektronischen Geräts 2 aus der Haltevorrichtung 1 kann die Haltevorrichtung 1 auch eine Mulde 13 aufweisen, in die eine Kante 14 des elektronischen Geräts 2 durch eine senkrecht auf die Frontfläche des elektronischen Geräts 2 wirkende Krafteinwirkung 11 hinein verschwenkt werden kann, so dass eine gegenüberliegende Kante 15 aus dem Aufnahmeraum 3 heraus verschwenkt wird, die dann zum Entnehmen des elektronischen Geräts 2 leicht vom Benutzer gegriffen werden kann.

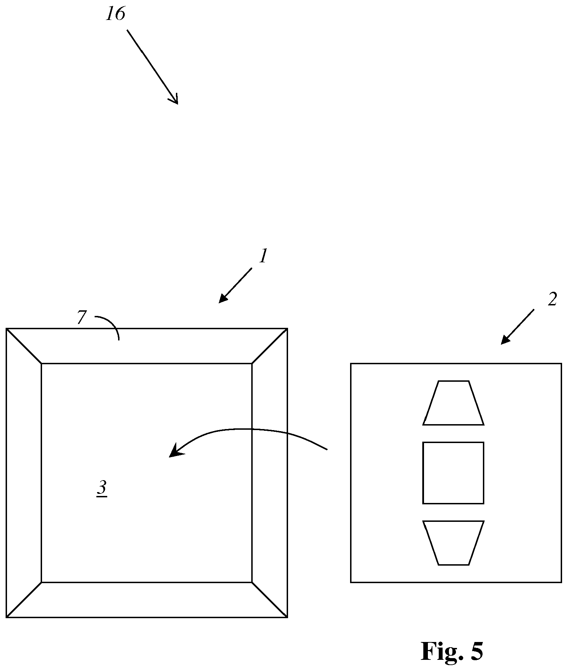

Figur 5 zeigt ein drittes Ausführungsbeispiel eines erfindungsgemäßen Systems 16 mit einer Haltevorrichtung 1 und einem elektronischen Gerät 2, das in den Aufnahmeraum 3 der Haltevorrichtung 1 einfügbar ist. Bei dieser Ausführung entspricht die Breite des Aufnahmeraums 3 seiner Höhe. Eine solche Ausführung bietet vorteilhaft optisch im Wesentlichen das Erscheinungsbild eines Einfachschalters oder einer Einfachsteckdose.

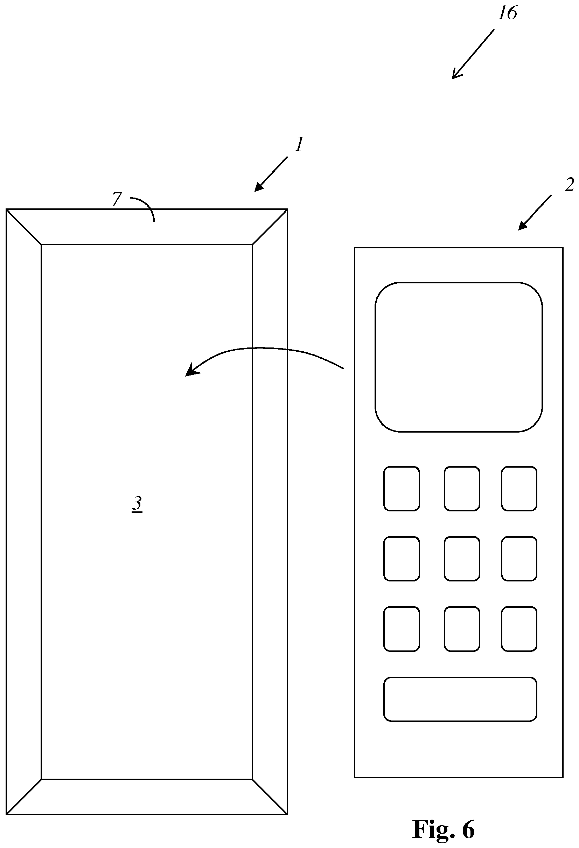

Fig. 6 zeigt ein viertes Ausführungsbeispiel eines erfindungsgemäßen Systems 16 mit einer Haltevorrichtung 1 und einem elektronischen Gerät 2, das in den Aufnahmeraum der Haltevorrichtung 1 einfügbar ist. Bei dieser Ausführung weist der Aufnahmeraum 3 eine Höhe auf, die dem doppelten seiner Breite plus der Breite des Rahmens 7 entspricht. Eine solche Ausführung bietet vorteilhaft optisch im Wesentlichen das Erscheinungsbild eines Doppelschalters oder einer Doppelsteckdose.

### Bezugszeichenliste:

- 1: Haltevorrichtung
- 2: elektronisches Gerät
- 3: Aufnahmeraum
- 4: Rückwand
- 5: Bohrungen
- 6: Rückseite
- 7: Rahmen
- 8: erstes Fixiermittel
- 9: zweites Fixiermittel
- 10: Vorsprung
- 11: Krafteinwirkung
- 12: Kante
- 13: Mulde
- 14: Kante
- 15: gegenüberliegende Kante
- 16: System

## Patentansprüche

1. System (16) beinhaltend eine
Haltevorrichtung (1) zum Halten eines elektronischen Gerätes (2) an einer Wand mit:
a. einem Befestigungselement zum Montieren der Haltevorrichtung (1) in einer Montagestellung an einer Wand und mit
b. einer Rückseite (6), die dazu ausgebildet und bestimmt ist, in der Montagestellung der Wand zugewandt zu sein, und mit
c. einem viereckigen Rahmen (7), der einen zu einer Vorderseite hin offenen Aufnahmeraum (3) für das elektronische Gerät (2) umgibt, und mit
d. wenigstens einem Fixiermittel (8), mit dem ein elektronisches Gerät (2) in dem Aufnahmeraum (3) werkzeugfrei in einer Fixierstellung fixierbar und werkzeugfrei wieder aus der Fixierstellung lösbar ist
und beinhaltend ein
elektronisches Gerät (2), das bezogen auf den viereckigen Rahmen (7) formschlüssig in dem Aufnahmeraum (3) in einer Fixierstellung fixierbar ist oder fixiert ist, **dadurch gekennzeichnet, dass**
der Rahmen (7) die Form und die Abmessungen eines Norm-Steckdosenblendrahmens oder eines Norm-Wippschalterblendrahmens aufweist und dass
das in der Fixierstellung fixierte elektronische Gerät (2) rückseitig an einem Vorsprung (10) anliegt und dass das elektronische Gerät (2) durch Ausüben einer Kraft auf dessen Vorderseite zum Lösen aus der Fixierstellung um den Vorsprung (10) verschwenkbar ist oder nach hinten eine Mulde (13) an den Aufnahmeraum (3) angrenzt, in die eine Kante (12) oder eine Ecke des elektronischen Gerätes (2) zum Lösen aus der Fixierstellung hinein verschwenkbar ist derart, dass eine gegenüberliegende Kante (14) oder Ecke des elektronischen Gerätes (2) sich nach vorne aus dem Aufnahmeraum (3) bewegt.

2. System (16) nach Anspruch 1, **dadurch gekennzeichnet, dass**
a. das Fixiermittel (8, 9) an dem Rahmen angeordnet ist oder dass das Fixiermittel Teil des Rahmens (7) ist, und/oder dass
b. das Fixiermittel (8, 9) wenigstens ein Rastelement und/oder einen Klemmbügel und/oder ein Klemmelement aufweist.

3. System (16) nach Anspruch 1 oder 2, **dadurch gekennzeichnet, dass** der Rahmen (7) Form und/oder Aussehen und/oder die Abmessungen des äußeren Rahmens eines Norm-Blendrahmens für eine Mehrfachsteckdose oder eines Norm-Blendrahmens für einen Mehrfachschalter aufweist.

4. System (16) nach einem der Ansprüche 1 bis 3, **dadurch gekennzeichnet, dass** der Aufnahmeraum (3) eine Breite im Bereich von 45 mm bis 60 mm, insbesondere im Bereich von 49 mm bis 56 mm, insbesondere von 50mm oder von 55 mm aufweist.

5. System (16) nach einem der Ansprüche 1 bis 4, **dadurch gekennzeichnet, dass**
a. der Aufnahmeraum (3) eine Höhe im Bereich von 45 mm bis 60 mm, insbesondere im Bereich von 49 mm bis 56 mm, insbesondere von 50mm oder von 55 mm aufweist, oder dass
b. der Aufnahmeraum (3) eine Höhe im Bereich von 110 mm bis 140 mm, insbesondere im Bereich von 122 mm bis 128 mm, insbesondere von 125 mm aufweist, oder dass
c. der Aufnahmeraum (3) eine Höhe im Bereich von 180 mm bis 210 mm, insbesondere im Bereich von 192 mm bis 198 mm, insbesondere von 195 mm aufweist, oder dass
d. die Breite und die Höhe des Aufnahmeraums (3) gleich sind, oder dass
e. der Aufnahmeraum (3) eine Höhe aufweist, die dem doppelten seiner Breite plus der Breite des Rahmens (7) entspricht, oder dass
f. der Aufnahmeraum (3) eine Höhe aufweist, die dem dreifachen seiner Breite plus dem doppelten der Breite des Rahmens (7) entspricht.

6. System (16) nach einem der Ansprüche 1 bis 5, **dadurch gekennzeichnet, dass** der Rahmen (7) eine Breite im Bereich von 5 mm bis 25 mm, insbesondere im Bereich von 12 mm bis 17 mm, insbesondere von 15 mm aufweist.

7. System (16) nach einem der Ansprüche 1 bis 6, **dadurch gekennzeichnet, dass** das Befestigungselement und/oder das Fixiermittel (8, 9) relativ zu dem Aufnahmeraum (3) derart angeordnet sind, dass sie von einem gehaltenen elektronischen Gerät (2) verdeckt werden.

8. System (16) nach einem der Ansprüche 1 bis 7, **dadurch gekennzeichnet, dass** der Aufnahmeraum (3) nach hinten teilweise von einem Vorsprung (10) begrenzt ist und/oder dass von hinten ein Vorsprung (10) in den Aufnahmeraum (3) ragt und/ oder dass eine Mulde (13) an den Aufnahmeraum (3) angrenzt, in die eine Kante (12) oder eine Ecke des elektronischen Gerätes (2) hinein verschwenkbar ist.

9. System (16) nach einem der Ansprüche 1 bis 8, **dadurch gekennzeichnet, dass** das elektronische Gerät (2) als Funk-Fernbedienung oder als Funk-Fernbedienung für einen Gurtwickler oder als Funk-Fernbedienung für einen motorisch angetriebenen Rollladen oder als Funk-Zeitschaltuhr oder als Tablet-PC oder als Telefon ausgebildet ist.

10. System (16) nach einem der Ansprüche 1 bis 9, **dadurch gekennzeichnet, dass** das elektronische Gerät (2) nach vorne hin bündig mit dem Rahmen (7) abschließend in dem Aufnahmeraum (3) fixierbar ist.

11. System (16) nach einem der Ansprüche 1 bis 10, **dadurch gekennzeichnet, dass** das in der Fixierstellung fixierte elektronische Gerät (2) zum Lösen aus der Fixierstellung heraus verschwenkbar ist.

12. Kombination von
a. einem System (16) nach einem der Ansprüche 1 bis 11 und
b. einer Adapterhaltevorrichtung mit einem viereckigen Adapter-Rahmen, der einen zu einer Vorderseite hin offenen Adapter-Aufnahmeraum für das elektronische Gerät (2) umgibt, und mit wenigstens einem Fixiermittel, mit dem das elektronische Gerät (2) in dem Adapter-Aufnahmeraum in einer Fixierstellung werkzeugfrei fixierbar und werkzeugfrei wieder aus der Fixierstellung lösbar ist, wobei die Adapterhaltevorrichtung, insbesondere formschlüssig, in den Aufnahmeraum (3) der Haltevorrichtung (1) des Systems (16) einfügbar und dort fixierbar ist.

13. Kombination nach Anspruch 12, **dadurch gekennzeichnet, dass** die Adapterhaltevorrichtung in den Aufnahmeraum (3) der Haltevorrichtung (1) eingefügt ist.

14. Kombination nach Anspruch 12 oder 13, **dadurch gekennzeichnet, dass** das elektronische Gerät (2) mittels der Adapterhaltevorrichtung in dem Aufnahmeraum (3) der Haltevorrichtung (1) fixierbar ist oder fixiert ist.

## Claims

1. System (16) containing
a retaining device (1) for retaining an electronic unit (2) on a wall, having:
a. a fastening element for installing the retaining device (1) in an installed position on a wall, and having
b. a rear side (6), which is designed and intended to be directed towards the wall in the installed position, and having
c. a quadrilateral frame (7), which surrounds an accommodating space (3) for the electronic unit (2), said accommodating space being open in the direction of a front side, and having
d. at least one fixing means (8) by way of which an electronic unit (2) can be fixed in a fixing position in the accommodating space (3) without the use of tools and can be released again from the fixing position without the use of tools,
and containing
an electronic unit (2) which, in relation to the quadrilateral frame (7), can be, or is, fixed in a form-fitting manner in a fixing position in the accommodating space (3), **characterized in that** the frame (7) has the shape and the dimensions of a standard wall-socket frame or of a standard rocker-switch frame, and **in that**
the electronic unit (2) fixed in the fixing position has its rear side butting against a protrusion (10), and **in that** the electronic unit (2) can be pivoted about the protrusion (10), in order to be released from the fixing position, by its front side being subjected to a force or, in the rearward direction, a hollow (13) is adjacent to the accommodating space (3), it being possible for an edge (12) or a corner of the electronic unit (2) to be pivoted into said hollow, in order to be released from the fixing position, such that an opposite edge (14) or corner of the electronic unit (2) moves in the forward direction out of the accommodating space (3).

2. System (16) according to Claim 1, **characterized in that**
a. the fixing means (8, 9) is arranged on the frame, or **in that** the fixing means is part of the frame (7), and/or **in that**
b. the fixing mans (8, 9) has at least one latching element and/or a clamping bracket and/or a clamping element.

3. System (16) according to Claim 1 or 2, **characterized in that** the frame (7) has the shape and/or appearance and/or the dimensions of the outer part of a standard frame for a multiple socket or of a standard frame for a multiple switch.

4. System (16) according to one of Claims 1 to 3, **characterized in that** the accommodating space (3) has a width ranging from 45 mm to 60 mm, in particular ranging from 49 mm to 56 mm, in particular of 50 mm or of 55 mm.

5. System (16) according to one of Claims 1 to 4, **characterized in that**
a. the accommodating space (3) has a height ranging from 45 mm to 60 mm, in particular ranging from 49 mm to 56 mm, in particular of 50 mm or of 55 mm, or **in that**
b. the accommodating space (3) has a height ranging from 110 mm to 140 mm, in particular ranging from 122 mm to 128 mm, in particular of 125 mm, or **in that**
c. the accommodating space (3) has a height ranging from 180 mm to 210 mm, in particular ranging from 192 mm to 198 mm, in particular of 195 mm, or **in that**
d. the width and the height of the accommodating space (3) are identical, or **in that**
e. the accommodating space (3) has a height which corresponds to double its width plus the width of the frame (7), or **in that**
f. the accommodating space (3) has a height which corresponds to three times its width plus double the width of the frame (7).

6. System (16) according to one of Claims 1 to 5, **characterized in that** the frame (7) has a width ranging from 5 mm to 25 mm, in particular ranging from 12 mm to 17 mm, in particular of 15 mm.

7. System (16) according to one of Claims 1 to 6, **characterized in that** the fastening element and/or the fixing means (8, 9) are/is arranged relative to the accommodating space (3) such that they are concealed by an electronic unit (2) which they retain.

8. System (16) according to one of Claims 1 to 7, **characterized in that** the accommodating space (3) is bounded in the rearward direction, in part, by a protrusion (10), and/or **in that** a protrusion (10) projects into the accommodating space (3) from the rear, and/or **in that** a hollow (13) is adjacent to the accommodating space (3), it being possible for an edge (12) or a corner of the electronic unit (2) to be pivoted into said hollow.

9. System (16) according to one of Claims 1 to 8, **characterized in that** the electronic unit (2) is designed in the form of a radio remote control or of a radio remote control for a belt winder or of a radio remote control for a motor-driven roller shutter or of a radio-frequency timer or of a tablet PC or of a phone.

10. System (16) according to one of Claims 1 to 9, **characterized in that** the electronic unit (2) can be fixed in the accommodating space (3) such that it terminates flush with the frame (7) in the forward direction.

11. System (16) according to one of Claims 1 to 10, **characterized in that** the electronic unit (2) fixed in the fixing position can be pivoted out of the fixing position for release purposes.

12. Combination of
a. a system (16) according to one of Claims 1 to 11, and
b. an adapter retaining device having a quadrilateral adapter frame, which surrounds an adapter accommodating space for the electronic unit (2), said adapter accommodating space being open in the direction of a front side, and having at least one fixing means, by way of which the electronic unit (2) can be fixed in a fixing position in the adapter accommodating space without the use of tools and can be released from the fixing position again without the use of tools, wherein the adapter retaining device can be introduced, in particular in a form-fitting manner, into the accommodating space (3) of the retaining device (1) of the system (16) and fixed there.

13. Combination according to Claim 12, **characterized in that** the adapter retaining device is introduced into the accommodating space (3) of the retaining device (1).

14. Combination according to Claim 12 or 13, **characterized in that** the electronic unit (2) can be, or is, fixed in the accommodating space (3) of the retaining device (1) by means of the adapter retaining device.

## Revendications

1. Système (16) contenant
un ensemble de maintien (1) qui maintient un appareil électronique (2) sur une paroi et qui présente :
a. un élément de fixation permettant de monter l'ensemble de maintien (1) dans une position de montage sur une paroi et
b. un côté arrière (6) configuré et défini pour être tourné vers la paroi en position de montage, et
c. un bâti (7) en quadrilatère qui entoure un espace (3) de réception de l'appareil électronique (2) ouvert en direction du côté avant et
d. au moins un moyen de fixation (8) par lequel un appareil électronique (2) peut être fixé sans recourir à un outil dans l'espace de réception (3) en une position de fixation et peut être libéré de la position de fixation sans recourir à un outil, et
contenant
un appareil électronique (2) qui peut être fixé ou est fixé dans une position de fixation dans l'espace de réception (3) en correspondance géométrique avec le bâti (7) rectangulaire,
**caractérisé en ce que**
le bâti (7) présente la forme et les dimensions d'un bâti de plaque de prise de courant normalisée ou un bâti de plaque de commutateur basculant normalisé,
**en ce que** l'appareil électronique (2) fixé dans la position de fixation repose par son dos sur une saillie (10),
**en ce que** l'appareil électronique (2) peut pivoter autour de la saillie (10) lorsqu'une force est appliquée sur son côté avant en vue de le libérer de la position de fixation ou
**en ce qu'**une moulure (13) dans laquelle une arête (12) ou un sommet de l'appareil électronique (2) peuvent pivoter pour les libérer de la position de fixation est réalisée de telle sorte qu'une arête (14) ou un sommet opposés de l'appareil électronique (2) se déplacent vers l'avant hors de l'espace de réception (3) est adjacente par l'arrière à l'espace de réception (3).

2. Système (16) selon la revendication 1, **caractérisé en ce que**
a. le moyen de fixation (8, 9) est disposé sur le bâti ou **en ce que** le moyen de fixation fait partie du bâti (7) et/ou **en ce que**
b. le moyen de fixation (8, 9) présente au moins un élément d'encliquetage et/ou, un étrier de serrage et/ou un élément de serrage.

3. Système (16) selon les revendications 1 ou 2, **caractérisé en ce que** le bâti (7) présente la forme, l'aspect et/ou les dimensions du bâti extérieur d'un bâti à plaque normalisé pour prise multiple ou d'un bâti à plaque normalisé pour commutateur multiple.

4. Système (16) selon l'une des revendications 1 à 3, **caractérisé en ce que** l'espace de réception (3) présente une largeur de l'ordre de 45 mm à 60 mm, en particulier de l'ordre de 49 mm à 56 mm et notamment de 50 mm ou de 55 mm.

5. Système (16) selon l'une des revendications 1 à 4, **caractérisé en ce que**
a. l'espace de réception (3) présente une hauteur de l'ordre de 45 mm à 60 mm, en particulier de l'ordre de 49 mm à 56 mm et notamment de 50 mm ou de 55 mm ou **en ce que**
b. l'espace de réception (3) présente une hauteur de l'ordre de 110 mm à 140 mm, en particulier de l'ordre de 122 mm à 128 mm et notamment de 125 mm, ou **en ce que**
c. l'espace de réception (3) présente une hauteur de l'ordre de 180 mm à 210 mm, en particulier de l'ordre de 192 mm à 198 mm et notamment de 195 mm, ou **en ce que**
d. la largeur et la hauteur de l'espace de réception (3) sont identiques, ou
**en ce que**
e. l'espace de réception (3) présente une hauteur qui correspond au double de sa largeur plus la largeur du bâti (7) ou
**en ce que**
f. l'espace de réception (3) présente une hauteur qui correspond au triple de sa largeur plus le double de la largeur du bâti (7).

6. Système (16) selon l'une des revendications 1 à 5, **caractérisé en ce que** le bâti (7) présente une largeur de l'ordre de 5 mm à 25 mm, en particulier de l'ordre de 12 mm à 17 mm et notamment de 15 mm.

7. Système (16) selon l'une des revendications 1 à 6, **caractérisé en ce que** l'élément de fixation et/ou le moyen de fixation (8, 9) sont disposés par rapport à l'espace de réception (3) de telle sorte qu'il soit recouvert par l'appareil électronique (2) que contient l'espace de réception.

8. Système (16) selon l'une des revendications 1 à 7, **caractérisé en ce que** l'espace de réception (3) est délimité vers l'arrière en partie par une saillie (10), et/ou **en ce qu'**une saillie (10) déborde depuis l'arrière dans l'espace de réception (3) et/ou **en ce qu'**une moulure (13) dans laquelle une arête (12) ou un sommet de l'appareil électronique (2) peuvent pivoter est adjacente à l'espace de réception (3).

9. Système (16) selon l'une des revendications 1 à 8, **caractérisé en ce que** l'appareil électronique (2) est configuré comme commande à distance par radio, comme commande à distance par radio pour un enrouleur de ceinture, comme commande à distance radio pour un volet entraîné par moteur ou comme programmateur radio, comme PC de tablette ou comme téléphone.

10. Système (16) selon l'une des revendications 1 à 9, **caractérisé en ce que** l'appareil électronique (2) peut être fixé par l'avant à chant avec le bâti (7) en étant englobé dans l'espace de réception (3).

11. Système (16) selon l'une des revendications 1 à 10, **caractérisé en ce que** l'appareil électronique (2) fixé en position de fixation peut pivoter hors de sa position de fixation pour être détaché.

12. Combinaison de
a. un système (16) selon l'une des revendications 1 à 11 et
b. un ensemble de support d'adaptateur présentant un bâti rectangulaire d'adaptateur qui entoure un espace de réception d'adaptateur de l'appareil électronique (2) ouvert sur un côté avant, et au moins un moyen de fixation par lequel l'appareil électronique (2) peut être fixé en une position de fixation dans l'espace d'adaptateur et de réception sans recourir à un outil et peut être libéré de la position de fixation sans recourir à un outil, l'ensemble de support d'adaptateur pouvant être inséré en particulier en correspondance géométrique dans l'espace de réception (3) de l'ensemble de retenue (1) du système (16) pour y être fixé.

13. Combinaison selon la revendication 12, **caractérisée en ce que** l'ensemble de support d'adaptateur est inséré dans l'espace de réception (3) de l'ensemble de retenue (1).

14. Combinaison selon les revendications 12 ou 13, **caractérisée en ce que** l'appareil électronique (2) peut être fixé ou est fixé dans l'espace de réception (3) de l'ensemble de retenue (1) au moyen de l'ensemble de retenue et d'adaptateur.
